# EUROPEAN PATENT APPLICATION

(11) **EP 2 536 185 A2**
(43) Date of publication of application: **19.12.2012**
(21) Application number: 12171519.7
(22) Date of filing: 11.06.2012
(51) Int. Cl.: H04W 8/26

(54) **Centralized Bluetooth Device Pairing**

(30) Priority: 14.06.2011 US 201113134707
(71) Applicant: Mitel Networks Corporation, Ottawa, ON K2K 2W7 (CA)
(72) Inventor: Couse, Peter Francis, Ottawa, Ontario K2C 0G5 (CA)
(74) Representative: Venner Shipley LLP

(57) **Abstract**

This disclosure relates to centralized Bluetooth™ pairing. The centralized pairing provides the ability to have a Bluetooth device that has been paired to one personal use phone on a Voice over Internet Protocol system automatically pair to another personal use phone on the system when the user logs into that phone. This pairing can be tied to a user profile and be initiated once the user logs into the other phone. Centralized pairing can also be provided to allow a Bluetooth device that has been paired to a common use device in one meeting room automatically pair to another common use device in a different meeting room when they enter the room. The Bluetooth interface in the common use devices can periodically scan for Bluetooth devices within range and pair the device if it is still within range after a predetermined number of scans.

## Description

### Technical Field

This disclosure generally relates to pairing, and more particularly, to connecting a Bluetooth™ device that has been paired with one communication device automatically to another communication device on the same system.

### Background

With the popularity of Bluetooth™ wireless interfaces, it is becoming more common for Internet Protocol (IP) phone manufacturers to offer Bluetooth™ interfaces within their phones to enable connection of devices such as headsets, keyboards, mice and mobile handsets. Operationally, in order to use their Bluetooth™ device with an IP phone, the user must first pair the device with the phone. The user can then choose to have the device connect to the phone whenever they are within range so the device can be used. For example, if the user pairs their Bluetooth headset with their IP phone, whenever they are within range of their IP phone, they can use the headset for calls placed or received on the IP phone.

Most Voice over Internet Protocol (VoIP) system vendors provide the ability for a user to log into any IP phone in the system and make it their own such that the phone assumes their programmed speed dials, privileges and other phone settings. Nevertheless, with each different phone the user logs into, they are required to go through the process of pairing their Bluetooth™ device to the IP phone. Accessing the pairing process in many phones is not obvious to the user and in general, results in a hassle for the user diminishing the value of being able to use their Bluetooth™ device with the IP phone currently being used.

Many of the services offered over Bluetooth can expose private data or allow a party to eavesdrop using their Bluetooth device. For security reasons it is therefore necessary to control which Bluetooth devices are allowed to connect to a given device. At the same time, it is useful for Bluetooth devices to automatically establish a connection without user intervention as soon as they are in range.

A Bluetooth device and system aimed at eliminating the need to pair a user's Bluetooth device as they move from one IP phone to another is therefore needed. These, as well as other related advantages and features, will be described in the present disclosure.

### Brief Description of Drawings

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The disclosure itself, however, as well as a preferred mode of use, further objectives and advantages thereof, will be best understood by reference to the following detailed description of illustrative embodiments when read in conjunction with the accompanying drawings, wherein:
FIGURE 1 is an exemplary system depicting centralized Bluetooth™ device pairing in accordance with one or more aspects of the present disclosure;
FIGURE 2 is a flow chart illustrating procedures for setting up personal use devices in accordance with one or more aspects of the present disclosure;
FIGURE 3 is a flow chart illustrating procedures for automatically pairing personal use devices in accordance with one or more aspects of the present disclosure;
FIGURE 4 is a flow chart illustrating procedures for setting up common use devices in accordance with one or more aspects of the present disclosure; and
FIGURE 5 is a flow chart illustrating procedures for automatically pairing common use devices in accordance with one or more aspects of the present disclosure.

### Description of the Disclosure

The description set forth below in connection with the appended drawings is intended as a description of presently preferred embodiments of the disclosure and is not intended to represent the only forms in which the present disclosure can be constructed and/or utilized. The description sets forth the functions and the sequence of steps for constructing and operating the disclosure in connection with the illustrated embodiments. It is to be understood, however, that the same or equivalent functions and sequences can be accomplished by different embodiments that are also intended to be encompassed within the spirit and scope of this disclosure.

The present disclosure relates to pairing devices. More particularly, this disclosure relates to centralized Bluetooth™ pairing. In one illustrative embodiment, the centralized pairing provides the ability to have a Bluetooth device that has been paired to one Internet Protocol (IP) phone on a Voice over Internet Protocol (VoIP) system automatically pair to another IP phone on the same system when the user logs in to that phone. This pairing, intended for a personal use device, can be tied to a user profile and be initiated once the user logs into the other IP phone. In another illustrative embodiment, that can be related or not, centralized pairing can be provided which can allow a Bluetooth device that has been paired to an IP conference phone in one meeting room to automatically pair to another IP conference phone in a different meeting room when they enter that room. To prevent erroneous pairings caused by transient devices, the Bluetooth interface in the conference phones can periodically scan for Bluetooth devices within range and pair the device if it is still within range after a predetermined number of scans. This pairing for common use devices is generally not tied to a user profile and is automatic without user login. In both illustrative embodiments, the pairings can co-exist in an enterprise and can potentially share a common paired device database by searching the data in different manners i.e. search for a user profile versus search for a device unique identifier (UID).

Numerous advantages can be offered by the illustrative embodiment described above. A centralized mechanism for storing pairing information for a user's Bluetooth device against their VoIP system profile can allow a user to log into a VoIP phone, upload the user's device pairing information into the VoIP phone from the centralized VoIP system and automatically pair the device if it is within range once the user is logged into the phone thereby removing security deficiencies. Once logged in and paired with one device, the user no longer has to pair with other devices creating additional benefits. Many additional advantages of the present disclosure will become apparent to those skilled in the relevant art as provided for in the following description.

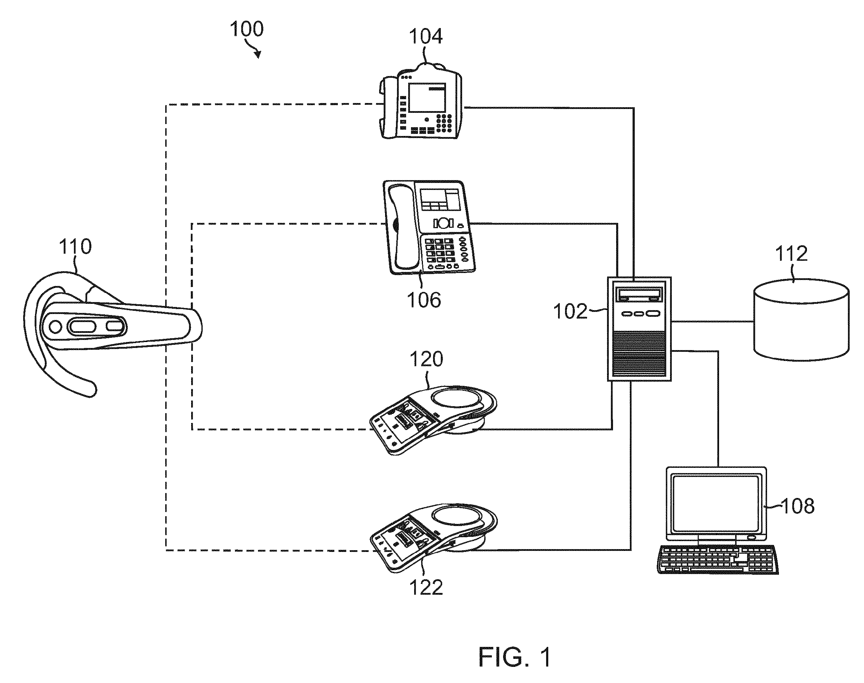

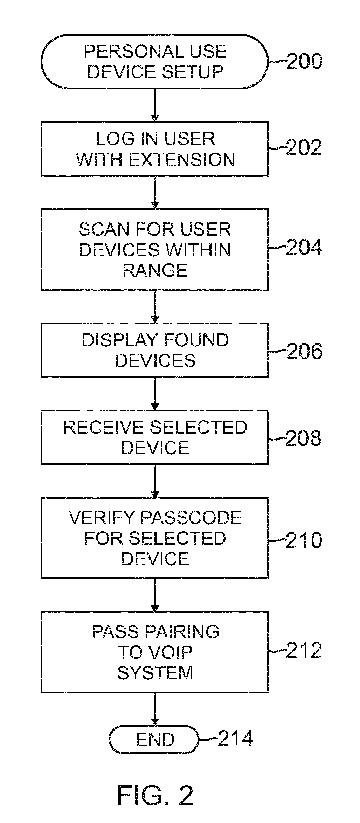

An exemplary environment for pairing a Bluetooth device with multiple communication devices will be described in FIGURE 1. FIGURES 2 through 5 will provide exemplary procedures for pairing these devices. Bluetooth is a short-range, wireless technology developed to help eliminate the use of physical cables for both portable and fixed-location devices. While Bluetooth has been primarily used in the present disclosure, those skilled in the relevant art will appreciate that other standards for wireless communications can be implemented including technologies that are capable of identifying a device's location such as WiFi™, Global System for Mobile Communications (GSM™), Global Positioning Systems (GPS), etc. The centralized VoIP system can be referred to as a centralized system. IP phones, for purposes of the present disclosure, can be interchangeable with other communication devices. These IP phones can also be referred to as personal use devices. Conference phones, as described herein, can also be interchangeable with other communication devices and can be referred to as common use devices.

Turning now to FIGURE 1, an exemplary system 100 depicting centralized Bluetooth device pairing in accordance with one or more aspects of the present disclosure is provided. The system 100 can include a centralized VoIP system 102 that can be coupled to a number of different components including, but not limited to, a first IP phone 104 and a second IP phone 106 or a first conference phone 120 and a second conference phone 120. A system administrator terminal 108 can also be connected to the VoIP system 102. The phones 104, 106, 120 and 122 can be paired with a Bluetooth device 110. A separate database 112 for storing system profiles associated with paired devices 110 can be maintained. The system 100 shown represents one embodiment and should not be construed as the only working environment for the centralized system 102 and the phones 104, 106, 120 and 122. Furthermore, the system 100 can be separated into two systems, one representing Bluetooth pairing with the personal use devices 104 and 106 and the other paired with the common use devices 120 and 122.

The VoIP system 102 can operate on a traditional server. The server can include an operating system and software instructions, ROM, RAM, at least one processor and a network interface. The database 112 storing system profiles can be a part of or connected to the VoIP system 102. The server can process requests from phones 104, 106, 120 and 122 or any other component within the system 100. The server can typically handle high volumes of transactions and large amount of queries for communication and data processing. RAM and ROM are used to support the program codes that are operated by the processor. The memory can be in a form of a hard disk, CD ROM, or equivalent storage medium. The processor can support the authentications such as communications from external data servers, as well as allowing for anonymous transactions and general data encryption.

The data storage on the server for the VoIP system 102 can include hard disk magnetic or optical storage units, as well as CD ROM, CD RW or DVD ROM and flash memory such as compact flash and secure digital cards. The data storage contains databases used in the processing of transactions. Conventional Ethernet technology can serve as the network interface. Alternatively a cable or DSL modem can be used as a network interface. While the above embodiment describes a single component acting as the server for the VoIP system 102, the functionality can be distributed over multiple computing systems. In one embodiment, the server is configured in a distributed architecture, wherein the databases and processors are housed in separate units or locations.

With reference to the phones 104, 106, 120 and 122, a processor for implementing logic, memory, a display and an input device can be provided in each. A system bus can be used for video and audio data as well as propagating signals for processing the video and audio. These signals can be provided to the VoIP system 102. The phones 104, 106, 120 and 122 typically include both volatile memory and non-volatile memory. The phones 104, 106, 120 and 122 can include an operating system (OS) stored in the memory, which can manage programs. Those skilled in the relevant art will appreciate that fewer or more phones can be provided within the system 100.

An administrator terminal 108 can be coupled to the VoIP system 102. Through the terminal 108, an interface for system administrators can be provided for the paired device database 112. In one embodiment, the terminal 108 for system administrators can allow them to delete a user device 110 record or turn off the auto-connect capability for a particular user, for example, to prevent auto-pairing of a device 110 that belongs to a user who sits close to a meeting room resulting in their device 110 auto-pairing to the phones 120 and 122 whenever they walk into their office.

Continuing with FIGURE 1, Bluetooth devices 110 can be connected wirelessly with the phones 104, 106,120 and 122. The phones 104, 106, 120 and 122 can have a Bluetooth wireless interface to enable connection with these devices 110. The Bluetooth devices 110 can be, but are not limited to, headsets, keyboards, mice and mobile handsets. Components within the system 100 can be connected to other components through a network. Those skilled in the relevant art will appreciate that the network can include the Internet, intranet, wide-area network (WAN), local-area network (LAN), personal-area network (PAN), campus-area network (CAN), metropolitan area network (MAN), global-area network (GAN), virtual private network, or any other type of network supporting communication between components of the system 100. Both wired and wireless connections, including optical links, can be implemented.

The technology described herein can be implemented as logical operations and/or modules. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying environment in which the described disclosure is implemented. The logical operations making up the embodiment of the disclosure described herein are referred to variously as operations, steps, objects, or modules. It should be understood that logical operations can be performed in any order, unless explicitly claimed otherwise or a specific order is inherently necessitated by the claim language.

Various embodiments of the present disclosure can be programmed using an object-oriented programming language, such as SmallTalk, Java, C++, Ada, or C#. Other object-oriented programming languages can also be used.

Alternatively, functional, scripting, and/or logical programming languages can be used. Various aspects of this disclosure can be implemented in a non-programmed environment, for example, documents created in HTML, XML, or other format that, when viewed in a window of a browser program, render aspects of a GUI or perform other functions. Various aspects of the disclosure can be implemented as programmed or non-programmed elements, or any combination thereof.

As depicted above, the VoIP system 102 was used for automatically connecting a user device 110 with personal use devices 104 and 106 or common use devices 120 and 122. With personal use devices 104 and 106, the user typically logs into a first phone 104 in order to pair their device 110 and has their pairing information uploaded into the central VoIP system 102. FIGURE 2 is a flow chart illustrating procedures for setting up personal use devices 104 and 106 in accordance with one or more aspects of the present disclosure. The processes can begin at block 200. While the first personal use device 104 is setup within these procedures, those skilled in the relevant art will appreciate that the second device 106 can instead be setup first.

At block 202, a user can log into a first phone 104. In one embodiment, the first phone 104 can be a user's office phone. Typically, an extension number can be provided with the login, which uniquely identifies the user. After logging in, the user can choose to pair a supported Bluetooth device 110, such as a Bluetooth headset, with the phone 104. To begin the pairing processes, generally, both Bluetooth-enabled mobile phones and wireless headsets are placed in pairing mode before a connection is made. In one embodiment, the Bluetooth device 110o can be placed into pairing mode when turned on. On some devices 110, to conserve battery power automated pairing is shut off and must be turned on when pairing.

At block 204, the first IP phone 104 can initiate a scan of Bluetooth devices 110 within range of the phone 104. This can result in a list of potential devices 110 being presented on a display of the phone 104 at block 206. In one embodiment, the user can select their device 110 from the list. This selection can be received by the IP phone 104 at block 208. The user of the device 110 can be prompted to enter a passcode for the device. The passcode can be limited to numeric entries or in the alternative, alphanumeric entries.

The phone 104 can receive the passcode for the selected device 110. The phone 104 becomes paired with that specific Bluetooth device 110 when the passcode is verified or authenticated at block 210. At block 212, the IP phone 104 can pass the pairing information to the VoIP system 102, which can include the Bluetooth device UID and passcode. This can be passed to the VoIP system 102 from the IP phone 104 as part of the pairing process. The VoIP system 102 can store this pairing information within a user's profile against their extension number or username within the database 112. The processes for setting up personal use devices can end at block 214.

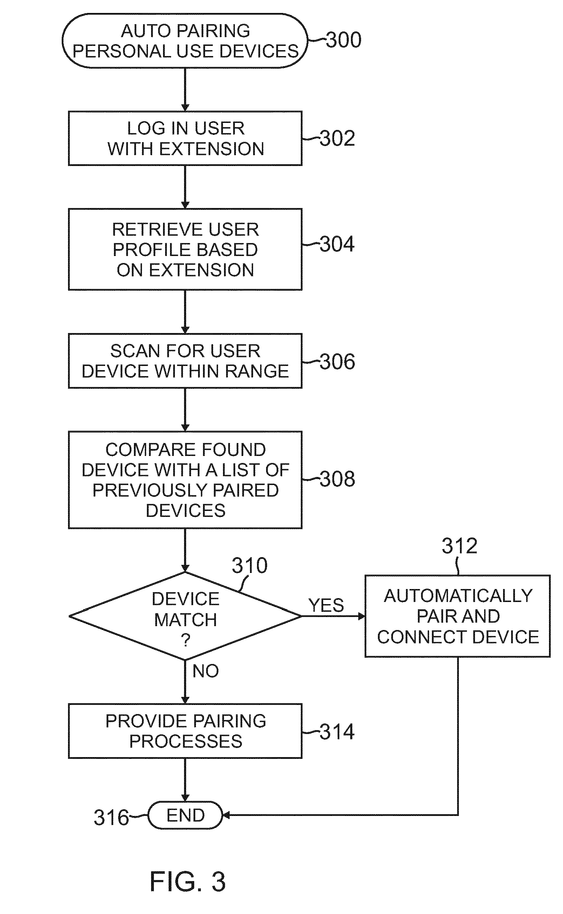

After pairing with the first phone 104, the user device 110 can be automatically paired when the user logs into another phone 106 by tying the user profile that was earlier stored in the database 112. FIGURE 3 is a flow chart illustrating procedures for automatically pairing personal use devices 104 and 106 in accordance with one or more aspects of the present disclosure. The processes can begin at block 300. At block 302, the user can log into an IP phone 106 connected to the VoIP system 102 using their extension number or username and a passcode.

At block 304, the IP phone 106 can retrieve the user's profile based on the extension number or username used to log in. Part of the information retrieved as part of the user's profile can be the pairing information for Bluetooth™ devices 110 that the user had previously paired with the first IP phone 104. The Bluetooth interface within the phone 106 can scan the surrounding area to determine devices 110 that are within range at block 306.

At block 308, the IP phone 106 can compare the results of the scan with the list of previously paired devices 110 contained within their profile. This information can be pulled from the VoIP system 102 containing the system profile database 112. At decision block 310, the IP Phone 106 can determine whether there is a match for the device 110. When a match is found, at block 312, the Bluetooth interface of the second IP phone 106 can automatically pair and connect the device 110 without requiring any user intervention. In this way, the device 110 can be ready to use with the IP phone 106 once the user has logged in. Alternatively, the pairing processes described in FIGURE 2 can be used to pair the device 110 with the second IP phone 106 at block 314. The processes for automatically paring with the second IP phone 106 can end at block 316. When the user logs out of the personal use IP Phone 106, the pairing information local to the IP Phone 106 can be deleted while the information can remain in the centralized database 112 for the VoIP system 102.

With common use phones 120 and 122, a number of devices share a separate common pairing information database, which can be the same database 112 as used for personal use devices 104 and 106. Alternatively, an entirely separate database can be used. For the personal use devices 104 and 106, the database 112 could be searched based on the user's extension number. Common use devices, on the other hand, can be searched based on a Bluetooth device UID. There is no need for the user to log into the conference phone 120. The conference phone 120 can check to see if any of the devices 110 in the room are contained within the pairing database 112.

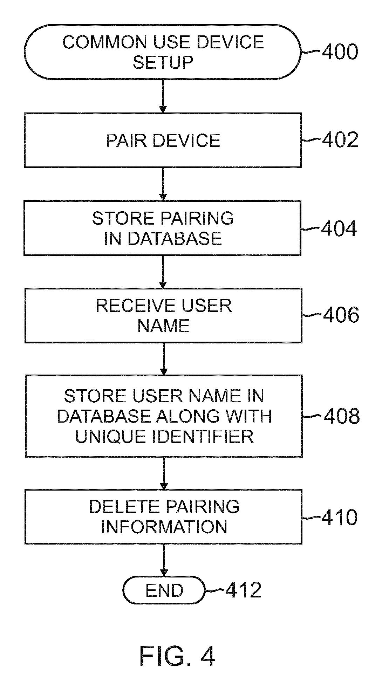

FIGURE 4 is a flow chart illustrating procedures for setting up common use devices 120 and 122 in accordance with one or more aspects of the present disclosure. The processes can begin at block 400. At block 402, a Bluetooth device 110 can be paired with a first conference phone 120. An example of this is a VoIP conference phone 120 in a meeting room that supports connection of multiple Bluetooth devices 110 such as headsets or mobile phones or a combination thereof. Those skilled in the relevant art will appreciate that conference phone 122 can be setup instead.

At block 404, the pairing information is stored in a database 112 that can be accessible by another conference phone 122 on the VoIP system 102. In this way, a user who has paired their Bluetooth device 110 with one conference phone 120 in one meeting room can walk into a different meeting room and have their Bluetooth device 110 automatically pair and connect with a second conference phone 122 in that room. The user can then be prompted for a username. At block 406, the conference device 120 can receive the username associated with the Bluetooth device 110. The username, at block 408, can then be stored in the database 112 along with a UID of the Bluetooth device 110. When the Bluetooth device 110 is no longer required or is out of range of the conference device 120, the pairing information local to the conference device 120 can be deleted at block 410 while the information can remain in the centralized database 112 for the VoIP system 102. The processes can end at block 412.

As described above, the first time a user pairs their Bluetooth device 110 with the conference phone 120 on the system 102, their pairing information is stored both in the conference phone's local Bluetooth interface and also in a paired device database 112 stored in a centralized VoIP system 102 that is accessible by other phones. Alternatively, if the user has already paired their device 110 with their personal use IP Phone 104, the conference phones 120 and 122 can search for the device's 110 UID within the paired device database 112 and use the information previously stored to pair the user's device 110 with the conference phones 120 and 122.

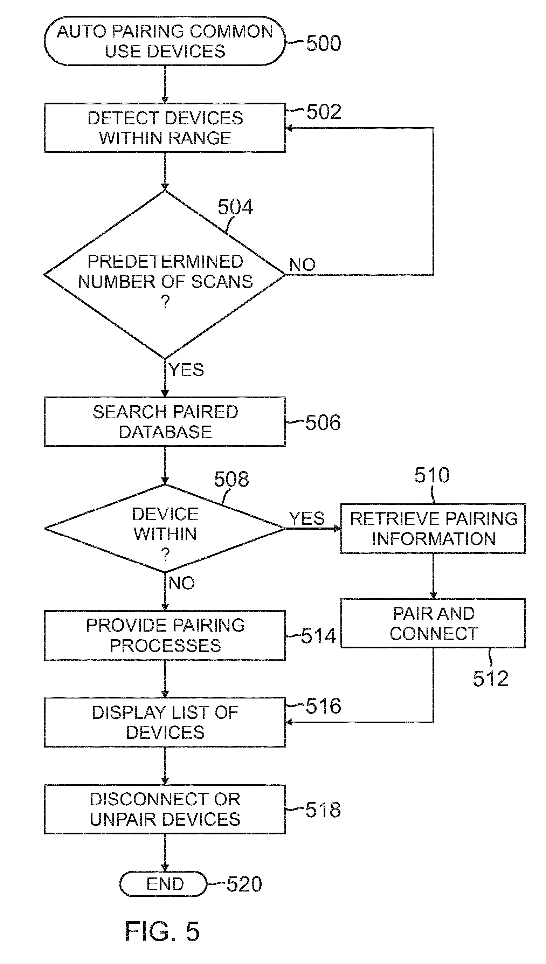

Referring to FIGURE 5, a flow chart illustrating procedures for automatically pairing common use devices 120 and 122 in accordance with one or more aspects of the present disclosure is provided. The processes can begin at block 500. While conference device 122 is paired, those skilled in the relevant art will appreciate that the same processes can be used to pair conference device 120. At block 502, the Bluetooth interface in the conference phone 122 can periodically scan for Bluetooth devices 110 within range. In order to avoid picking up transient devices 110, the Bluetooth interface in the conference phone 122 can conclude that a device 110 is present when the device 110 remains within range for a predetermined number of scan periods. This is typically required in the case of common use devices 120 and 122, such as a conference phone, because the conference phone automatically pairs without any user intervention. In the case of the personal use device, the user must generally log into the device first, while for common use devices, users are automatically connected. In one embodiment, a device 110 is present when three scans are made and each of the scans found the device 110.

At decision block 504, the conference phone 122 can determine whether the predetermined number of scans has been detected and whether any Bluetooth devices 110 have been found. When no devices 110 have been found, the conference phone 122 can continue to scan. This can show that there is no definitive conclusion that the device 110 is within range and should be paired. Because the previous pairing information was deleted from conference phone 120, the processes described herein can be used to reestablish the connection with the Bluetooth device 110 and the conference phone 120.

Once the Bluetooth interface in the conference phone 122 has determined that a device 110 is present, it can search the central paired device database 112 at block 506. At decision block 508, the conference phone 122 can determine if the pairing information for the device 110 has been stored. When it has, the conference phone 122 can retrieve the pairing information for the device 110 from the database 112 at block 510. The user device 110 can then be paired and connected with the conference phone 122 automatically using the retrieved information at block 512. Otherwise, and when the pairing information is not found, the device 110 can be paired through pairing processes described in FIGURE 4 at block 514. In one embodiment, the device 110 can be disconnected with the first conference phone 120 before automatically connecting to the second conference phone 122.

At block 516, the conference phone 122 can display a list of Bluetooth devices 110 that have been paired and connected. Generally, this is only applicable to common use devices 120 and 122 where any number of devices 110 can be paired. The user of the conference phone 122 can see whose devices 110 are paired in order to identify if there are any paired devices 110for users that are not in the room. For example, a user can be close enough to the meeting room such that their device 110 is considered present even though they are not physically in the room. The user of the conference phone 122 can then choose to disconnect or un-pair any devices 110 that are not actually present in the room at block 518. This removes them locally, but does not remove them from the central database 112. The processes for automatically pairing common use devices 120 and 122 can end at block 520.

In software implementations, computer software and/or data is stored on a machine readable medium as part of a computer program product, and is loaded into a computer system or other device or machine via a removable storage drive, hard drive, or communications interface. Computer programs, also called computer control logic or computer readable program code, are stored in a main and/or secondary memory, and executed by one or more processors, controllers, or the like to cause the one or more processors to perform the functions of the disclosure as described herein.

The figures and examples above are not meant to limit the scope of the present disclosure to a single embodiment, as other embodiments are possible by way of interchange of some or all of the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present disclosure, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

One aspect of the specification provides a system comprising:
a database coupled to a plurality of common use devices;
wherein a unique identifier (UID) is captured when a user of a wireless device pairs and connects with a first common use device, said UID of said wireless device stored in said database by said first common use device, said user of said wireless device automatically connecting to a second common use device when said wireless device comes within range of said second common use device and said UID is retrieved from said wireless device and associated with said UID in said database stored by said first common use device.

Said wireless device may be disconnected with said first common use device or said second common use device when out of range.

The system may comprise a terminal for an administrator who turns on or off automatic connections.

Another aspect provides a conference apparatus configured to:
scan for at least one user wireless device;
search for a unique identifier (UID) associated with said at least one user wireless device when said at least one user wireless device is within range of said conference apparatus for a predetermined number of scans;
pair said at least one user wireless device when said UID is found for said at least one user wireless device.

The conference apparatus may comprise a display, wherein said memory storing program instructions, when executed by said processor, causes said processor to provide a list of all user devices found within said range of said conference apparatus to said display.

The conference apparatus may disconnect paired devices when instructed. Said predetermined number of scan may be three.

## Claims

1. A method of connecting a user wireless device with a plurality of personal use devices, said method comprising:
pairing a user wireless device with a personal use device;
storing pairing information against a user profile; and
pairing said user wireless device with at least one other personal use device through said pairing information stored against said user profile.

2. The method of claim 1, wherein pairing said user wireless device with said personal use device comprises:
logging into said personal use device by entering an extension number or username and passcode;
initiating a pairing process on said personal use device and said user wireless device;
selecting said wireless device from a list of wireless devices within range displayed on said personal use device; and
entering a passcode for said wireless device on said personal use device.

3. The method of claim 2, wherein storing said pairing information against said user profile comprises placing a unique identifier (UID) and said passcode for said wireless device into a database.

4. The method of claim 3, wherein pairing said user wireless device with at least one other personal use device through said pairing information stored against said user profile comprises:
logging into said at least one other personal use device through said extension number or username and passcode;
locating said user profile through said extension number or username; and
connecting said user wireless device with said at least one other personal use device when said UID and passcode for said user wireless device are found in said pairing information stored against said user profile.

5. The method of any preceding claim, wherein storing said pairing information against a user profile comprises providing said pairing information to a centralized Voice over Internet Protocol system that maintains a plurality of user profiles.

6. The method of any preceding claim, comprising removing said pairing between said user wireless device and said personal use device.

7. The method of any preceding claim, wherein said personal use devices are IP phones.

8. A system comprising:
a database coupled to a plurality of common use devices;
wherein a unique identifier (UID) is captured when a user of a wireless device pairs and connects with a first common use device, said UID of said wireless device stored in said database by said first common use device, said user of said wireless device automatically connecting to a second common use device when said wireless device comes within range of said second common use device and said UID is retrieved from said wireless device and associated with said UID in said database stored by said first common use device.

9. The system of claim 8, wherein said plurality of common use devices are conference phones.

10. The system of claim 8 or claim 9, wherein said database comprises a list of previously connected wireless devices for said user.

11. The system of any of claims 8 to 10, wherein said wireless device is disconnected with said first common use device before automatically connecting to said second common use device.

12. A conference apparatus configured to:
scan for at least one user wireless device;
search for a unique identifier (UID) associated with said at least one user wireless device when said at least one user wireless device is within range of said conference apparatus for a predetermined number of scans;
pair said at least one user wireless device when said UID is found for said at least one user wireless device.

13. The conference apparatus of claim 12, configured to provide setup processes to initially pair said at least one user device.

14. The conference apparatus of claim 12 or claim 13, wherein scanning for said at least one user device comprises searching through a plurality of user devices on a Bluetooth interface.

15. The conference apparatus of any of claims 12 to 14 , wherein searching for said UID comprises accessing a remote database connected to a plurality of conference apparatuses.
